# EUROPEAN PATENT APPLICATION

(11) **EP 4 485 569 A1**
(43) Date of publication of application: **01.01.2025**
(21) Application number: 23774031.1
(22) Date of filing: 24.03.2023
(51) Int. Cl.: H01M 4/36, H01M 4/58, H01M 10/0525

(54) **COMPOSITE POSITIVE ELECTRODE MATERIAL, AND PREPARATION METHOD THEREFOR AND USE THEREOF**

(30) Priority: 25.03.2022 CN 202210306398
(71) Applicant: Eve Power Co., Ltd., Jingmen, Hubei 448000 (CN)
(72) Inventor: LI, Yongjun, Jingmen, Hubei 448000 (CN); ZHAO, Luhan, Jingmen, Hubei 448000 (CN); ZHAO, Ping, Jingmen, Hubei 448000 (CN); SHI, Zhongyang, Jingmen, Hubei 448000 (CN); WEN, Shengyao, Jingmen, Hubei 448000 (CN); LIU, Fanfen, Jingmen, Hubei 448000 (CN); ZHANG, Weikang, Jingmen, Hubei 448000 (CN); YUAN, Dingding, Jingmen, Hubei 448000 (CN); LV, Zhengzhong, Jingmen, Hubei 448000 (CN)
(74) Representative: Herrero & Asociados, S.L.
(86) International application number: PCT/CN2023/083886
(87) International publication number: WO 2023/179788

(57) **Abstract**

A composite positive-electrode material includes LMFP and LFP. The LMFP has a primary particle size in a range of 20nm-200 nm. The LFP has a primary particle size in at least two ranges of: 100nm-200 nm; 200nm-350 nm; 350nm-500 nm; and 500nm-1000 nm. The primary particle size of the LFP is larger than the primary particle size of the LMFP.

## Description

### TECHNICAL FIELD

The present disclosure relates to the field of lithium-ion batteries, and in particular to a composite positive-electrode material, a method of manufacturing the composite positive-electrode material, and an application of the composite positive-electrode material.

### BACKGROUND

As a power source for vehicles, a shortcoming of a lithium-ion battery, compared to traditional fossil fuels, is that the lithium-ion battery has a lower energy density, resulting in "mileage anxiety" in the market of new energy vehicles. Therefore, for new energy vehicles, the energy density is a key indicator for the lithium-ion power battery. In order to achieve a higher energy density of single cell, the new energy vehicle is preliminarily configured with a ternary lithium battery (a nickel cobalt manganese, NCM, lithium battery). However, safety issues of the new energy vehicles are highlighted, and lithium iron phosphate (LFP) batteries are configured for the new energy vehicles.

A theoretical gram capacity of the LFP material is 170mAh/g, and an operating voltage platform of the LFP battery is 3.22V. In the art, a commercialized LFP material has a gram capacity of 160mAh/g, which is close to a theoretical upper limit. Therefore, in order to improve an energy density of the LFP battery is substantially to improve a compaction density of the LFP material. However, a highest compaction density of the LFP material is lower than 2.65g/cm³, such that the energy density of the single cell can hardly exceed 190Wh/kg. A ternary material has a higher energy density that the LFP material, and one of major reasons thereof is that the ternary material has a higher operating voltage, at 3.8V. Therefore, improving the operating voltage of the LFP material can effectively improve the energy density of the LFP battery.

A theoretical gram capacity of a lithium manganese iron phosphate (LMFP) material is the same as that of the LFP material, however, an electrode potential of the LMFP material relative to Li +/Li is 4.1 V. Under a same capacity, an energy density of the LMFP is 15% higher than that of the LFP, and therefore, the energy density of a battery cell having the LMFP material can exceed 200 Wh/kg. In addition, LMFP does not contain any precious metal element, and therefore, the LMFP material has a low cost and is environmentally friendly. Compared to the ternary material, the LMFP material has obvious advantages and is one of technological developing directions for high energy density batteries.

In the art, a method for improving safety performance of the ternary battery is provided and includes following operations. 1) A common cathode material, a ternary positive-electrode material, and lithium iron phosphate or lithium manganese iron phosphate are mixed with each other to obtain a positive-electrode material. 2) The positive-electrode material is used in a conventional process of manufacturing positive-electrode sheets of lithium-ion batteries to prepare a positive electrode of the ternary battery. 3) Graphite and lithium titanate are mixed to each other and are used in a conventional process of manufacturing negative-electrode sheets of lithium-ion batteries to prepare a negative electrode of the ternary battery. 4) A conventional process of assembling lithium-ion batteries and a conventional formation process for lithium-ion batteries are performed to prepare the ternary battery. In the above method, the LMPF is used as an additive to improve the safety performance of the NCM battery. That is, the LMFP material is mixed into the NCM material, and a positive-electrode active material is still based on the NCM material, potential of the LMFP material, serving as the positive-electrode active material is ignored.

Based on the above research, a composite positive-electrode material needs to be provided. The composite positive-electrode material includes LMFP. Compared to the conventional LFP positive-electrode material, the LMFP material has a higher discharging platform voltage, and therefore, the energy density of the battery is greatly improved. Compared to the conventional NCM positive-electrode material, the composite positive-electrode material has improved safety and stability performance.

### SUMMARY

The present disclosure provides a composite positive-electrode material, a method of manufacturing the composite positive-electrode material, and an application of the composite positive-electrode material. The composite positive-electrode material is obtained by compounding LMFP with LFP materials in various particle size ranges, such that an operating voltage is adjustable, and the energy density and the safety performance of the battery are improved.

In order to achieve the above technical objectives, following technical solutions are provided.

In a first aspect, the present disclosure provides a composite positive-electrode material, including LMFP and LFP.

The LMFP has a primary particle size in a range of 20nm-200 nm.

The LFP has a primary particle size in at least two ranges of: 100nm-200 nm; 200nm-350 nm; 350nm-500 nm; and 500nm-1000 nm.

The primary particle size of the LFP is larger than the primary particle size of the LMFP.

For the composite positive-electrode material described in the present disclosure, large-sized LFP particles are uniformly filled in gaps between small-sized LMFP particles. The LFP is a combination material formed by various-sized particles. In this way, when sizes of primary particles of LMFP are distributed from small to large within a range of 20nm-200 nm, the LFP particles can be filled in gaps between smaller sized LMFP particles and in gaps between larger sized LMFP particles, such that the large-sized LFP particles are uniformly filled into the gaps. Therefore, an overall compaction density of the material is improved, the energy density of the battery is improved, improving cycling performance of the battery. In addition, various-sized LFP particles are used to be adapted with the LMFP, enabling the voltage of the battery to be adjustable.

The LMFP having the primary particle size in the range of 20nm-200 nm refers to a minimum value of the primary particle size of the LMFP being greater than 20nm. For example, the minimum value of the primary particle size of the LMF may be 20nm, 22nm, 24nm, 26nm, 28nm or 30nm. A maximum value of the primary particle size of the LMFP being less than 200nm. For example, the maximum value of the primary particle size of the LMF may be 200nm, 190nm, 180nm, 170nm, 160nm or 150nm. The size is not limited to the listed values, other values within the range are also applicable.

The LFP have the primary particle size in at least two ranges of: 100nm-200 nm; 200nm-350 nm; 350nm-500 nm; and 500nm-1000 nm. Typical, but not limiting, combinations of two particle size ranges include: a combination of the range of 200nm-350nm and the range of 350nm-500nm; a combination of the range of 500nm-1000nm and the range of 350nm-500nm; a combination of the range of 500nm-1000nm and the range of 100nm-200nm; a combination of the range of 200nm-350nm, the range of 350nm-500nm, and 500nm-1000nm; a combination of the range of 200nm-350nm, the range of 350nm-500nm, and the range of 100nm-200nm; and a combination of the range of 200nm-350nm, the range of 350nm-500nm, the range of 500nm-1000nm and the range of 100nm-200nm.

The LFP having the primary particle size in the range of 100nm-200nm refers to a minimum value of the primary particle size of the LFP being greater than 200nm. For example, the minimum value of the primary particle size of the LFP may be 200nm, 210nm, 220nm, 230nm, 240nm or 250nm. A maximum value of the primary particle size of the LFP being less than 350nm. For example, the maximum value of the primary particle size of the LFP may be 350nm, 340nm, 330nm, 320nm, 310nm or 300nm. The size is not limited to the listed values, other values within the range are also applicable.

The LFP having the primary particle size in the range of 150nm-500nm refers to a minimum value of the primary particle size of the LFP being greater than 150nm. For example, the minimum value of the primary particle size of the LFP may be 150nm, 160nm, 170nm, 180nm, 190nm or 200nm. A maximum value of the primary particle size of the LFP being less than 500nm. For example, the maximum value of the primary particle size of the LFP may be 500nm, 490nm, 480nm, 470nm, 460nm or 450nm. The size is not limited to the listed values, other values within the range are also applicable.

The LFP having the primary particle size in the range of 100nm-1000nm refers to a minimum value of the primary particle size of the LFP being greater than 100nm. For example, the minimum value of the primary particle size of the LFP may be 100nm, 110nm, 120nm, 130nm, 140nm or 150nm. A maximum value of the primary particle size of the LFP being less than 1000nm. For example, the maximum value of the primary particle size of the LFP may be 1000nm, 990nm, 980nm, 970nm, 960nm or 950nm. The size is not limited to the listed values, other values within the range are also applicable.

The LFP having the primary particle size in the range of 350nm-1000nm refers to a minimum value of the primary particle size of the LFP being greater than 350nm. For example, the minimum value of the primary particle size of the LFP may be 350nm, 360nm, 370nm, 380nm, 390nm or 400nm. A maximum value of the primary particle size of the LFP being less than 1000nm. For example, the maximum value of the primary particle size of the LFP may be 1000nm, 990nm, 980nm, 970nm, 960nm or 950nm. The size is not limited to the listed values, other values within the range are also applicable.

In some embodiments, a mass ratio of the LMFP to the LFP is (5-9) : (1-5). For example, the mass ratio may be 5:5, 6:4, 7:3, 8:2 or 9:1. The ratio is not limited to the listed ratios, other ratios within the ratio range are also applicable.

In some embodiments, the LMFP has a secondary particle size D₅₀ in a range of 0.5µm-10µm. For example, the secondary particle size D₅₀ may be 0.5 µm, 1 µm, 3 µm, 5 µm, 7 µm, 9 µm or 10 µm. The size is not limited to the listed values, other values within the range are also applicable.

In some embodiments, the LMFP has a secondary particle size D₉₀ in a range of 3µm-18µm. For example, the secondary particle size D₉₀ may be 3µm, 5µm, 7µm, 9µm, 11µm, 13µm, 15µm, 17µm or 18µm. The size is not limited to the listed values, other values within the range are also applicable.

In some embodiments, the LMFP includes any one or a combination of at least two of: LiMn_{0.5}Fe_{0.5}PO₄, LiMn_{0.6}Fe_{0.4}PO₄, LiMn_{0.7}Fe_{0.3}PO₄, LiMn_{0.8}Fe_{0.2}PO₄, or LiMn_{0.9}Fe_{0.1}PO₄. Typical, but not limiting, combinations of the LMFP include: a combination of LiMn_{0.5}Fe_{0.5}PO₄ and LiMn_{0.6}Fe_{0.4}PO₄; a combination of LiMn_{0.7}Fe_{0.3}PO₄ and LiMn_{0.8}Fe_{0.2}PO₄; or a combination of LiMn_{0.5}Fe_{0.5}PO₄ and LiMn_{0.9}Fe_{0.1}PO₄.

In a second aspect, the present disclosure provides a method of manufacturing the composite positive-electrode material in the first aspect. The method includes: taking the LMFP and the LFP according to formulated amount, and dry mixing the LMFP and the LFP to obtain the composite positive-electrode material.

In the present disclosure, a simple dry mixing process is performed to obtain the composite positive-electrode material in which the small-sized LMFP particles wraps the LFP particles. LMFP having different primary particle sizes are mixed with the LFP, such that the compaction density of the positive-electrode material is improved, and electrochemical performance of the battery is improved.

In some embodiments, the dry mixing is performed for 0.5h to 1h. For example, the dry mixing is performed for 0.5h, 0.6h, 0.7h, 0.8h, 0.9h or 1h. The tine length is not limited to the listed values, other values within the range are also applicable.

In some embodiments, the dry mixing includes a stirring speed of 10rpm to 20rpm. For example, the dry mixing includes a stirring speed of 10rpm, 12rpm, 14rpm, 16rpm, 18rpm or 20rpm. The stirring speed is not limited to the listed values, other values within the range are also applicable.

In some embodiments, the dry mixing includes a dispersion speed of 500rpm to 1500rpm. For example, the dry mixing includes a dispersion speed of 500 rpm, 700 rpm, 900 rpm, 1100 rpm, 1300 rpm or 1500 rpm. The dispersion speed is not limited to the listed values, other values within the range are also applicable.

In a third aspect, the present disclosure provides a lithium-ion battery, including the composite positive-electrode material in the first aspect.

In some embodiments, a negative-electrode active material of the lithium-ion battery includes graphite.

In some embodiments, a separator of the lithium-ion battery includes a PE separator or a PP separator.

In some embodiments, an electrolyte of the lithium-ion battery comprises LiPF₆.

In the present disclosure, following technical effects are achieved.

The LFP having various primary particle sizes are mixed with the LMFP having a primary particle size smaller than the various primary particle sizes of the LFP. In this way, the compaction density and the operating discharging platform voltage of the material are improved. Therefore, the energy density, the cycling performance and the safety performance of the lithium-ion battery are improved. In addition, the LFP of various particle sizes are used to be adapted with the LMFP, such that appropriate voltage platforms can be adjusted and determined according to demands, and the voltage of the battery is adjustable.

### SUMMARY OF THE INVENTION

### BRIEF DESCRIPTION OF THE DRAWINGS

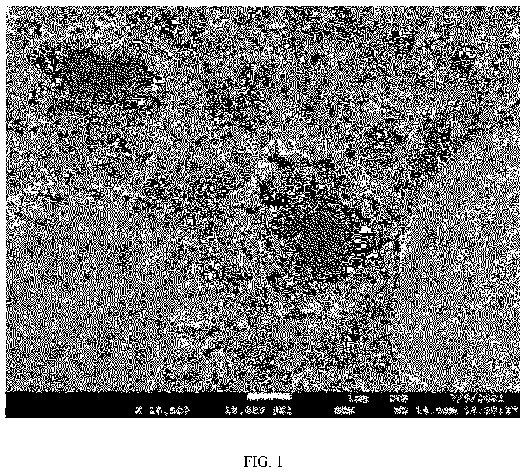

FIG. 1 is a scanning electron microscopic graph of a composite positive-electrode material according to the Embodiment 1 of the present disclosure.

### DETAILED DESCRIPTION

### Embodiment 1

The present embodiment provides a composite positive-electrode material. The composite positive-electrode material includes LMFP and LFP (LiFePO₄). The LMFP has a primary particle size in a range of 80nm-150 nm. The LFP includes LFP materials in four particle-size types. The four particle-size types of the LFP material have a primary particle size distributed in a range of 100nm-200 nm; a primary particle size distributed in a range of 200nm-350 nm; a primary particle size distributed in a range of 350nm-500 nm; and a primary particle size distributed in a range of 500nm-1000 nm.

The primary particle size of the LFP is larger than the primary particle size of the LMFP. A mass ratio of the LMFP to the LFP is 7:3.

The LMFP is LiMn_{0.7}Fe_{0.3}PO₄ having a secondary particle size D₅₀ of 5µm and a secondary particle size D₉₀ of 10µm.

A method of manufacturing the composite positive-electrode material includes: taking the LMFP and the LFP according to the formulated amount, dry mixing the LMFP and the LFP at a stirring speed of 15 rpm and at a dispersion speed of 1000 rpm, so as to obtain a composite positive-electrode active material.

A scanning electron microscopic graph of the composite positive-electrode material obtained in the present embodiment is shown in FIG. 1.

### Embodiment 2

The present embodiment provides a composite positive-electrode material. The composite positive-electrode material includes LMFP and LFP (LiLePO₄). The LMFP has a primary particle size in a range of 50nm-80 nm. The LFP includes LFP materials in four particle-size types. The four particle-size types of the LFP material have a primary particle size distributed in a range of 100nm-200 nm; a primary particle size distributed in a range of 200nm-350 nm; a primary particle size distributed in a range of 350nm-500 nm; and a primary particle size distributed in a range of 500nm-1000 nm.

The primary particle size of the LFP is larger than the primary particle size of the LMFP. The mass ratio of the LMFP to the LFP is 7:3.

The LMFP is LiMn_{0.8}Fe_{0.2}PO₄ having the secondary particle size D₅₀ of 0.5µm and the secondary particle size D₉₀ of 3µm.

The method of manufacturing the composite positive-electrode material includes: taking the LMFP and the LFP according to the formulated amount, dry mixing the LMFP and the LFP at a stirring speed of 20 rpm and at a dispersion speed of 1500 rpm, so as to obtain the composite positive-electrode active material.

### Embodiment 3

The present embodiment provides a composite positive-electrode material. The composite positive-electrode material includes LMFP and LFP (LiFePO₄). The LMFP has the primary particle size in a range of 20nm-50 nm. The LFP includes LFP materials in four particle-size types. The four particle-size types of the LFP material have a primary particle size distributed in a range of 100nm-200 nm; a primary particle size distributed in a range of 200nm-350 nm; a primary particle size distributed in a range of 350nm-500 nm; and a primary particle size distributed in a range of 500nm-1000 nm.

The primary particle size of the LFP is larger than the primary particle size of the LMFP. The mass ratio of the LMFP to the LFP is 7:3.

The LMFP is LiMn_{0.9}Fe_{0.1}PO₄ having the secondary particle size D₅₀ of 5µm and the secondary particle size D₉₀ of 18µm.

The method of manufacturing the composite positive-electrode material includes: taking the LMFP and the LFP according to the formulated amount, dry mixing the LMFP and the LFP at a stirring speed of 10 rpm and at a dispersion speed of 500 rpm, so as to obtain the composite positive-electrode active material.

### Embodiment 4

The present embodiment provides a composite positive-electrode material. The only difference between the present embodiment and the Embodiment 1 is that the LFP includes LFP materials in three particle-size types. The three particle-size types of the LFP material have a primary particle size distributed in a range of 100nm-200 nm; a primary particle size distributed in a range of 200nm-350 nm; and a primary particle size distributed in a range of 350nm-500 nm. The other features in the present embodiment is the same as those in the Embodiment 1.

For the method of manufacturing the composite positive-electrode material in the present embodiment, corresponding particle-size types of the LFP material are used herein, and other operations and materials used in the method of the present embodiment are the same as those in the Embodiment 1.

### Embodiment 5

The present embodiment provides a composite positive-electrode material. The only difference between the present embodiment and the Embodiment 1 is that the LFP includes LFP materials in three particle-size types. The three particle-size types of the LFP material have a primary particle size distributed in a range of 200nm-350 nm; a primary particle size distributed in a range of 350nm-500 nm; and a primary particle size distributed in a range of 500nm-1000 nm. The other features in the present embodiment is the same as those in the Embodiment 1.

For the method of manufacturing the composite positive-electrode material in the present embodiment, corresponding particle-size types of the LFP material are used herein, and other operations and materials used in the method of the present embodiment are the same as those in the Embodiment 1.

### Embodiment 6

The present embodiment provides a composite positive-electrode material. The only difference between the present embodiment and the Embodiment 1 is that the LFP includes LFP materials in two particle-size types. The two particle-size types of the LFP material have a primary particle size distributed in a range of 200nm-350 nm; and a primary particle size distributed in a range of 350nm-500 nm. The other features in the present embodiment is the same as those in the Embodiment 1.

For the method of manufacturing the composite positive-electrode material in the present embodiment, corresponding particle-size types of the LFP material are used herein, and other operations and materials used in the method of the present embodiment are the same as those in the Embodiment 1.

### Embodiment 7

The present embodiment provides a composite positive-electrode material. The only difference between the present embodiment and the Embodiment 1 is that the LFP includes LFP materials in two particle-size types. The two particle-size types of the LFP material have a primary particle size distributed in a range of 500nm-1000 nm; and a primary particle size distributed in a range of 350nm-500 nm. The other features in the present embodiment is the same as those in the Embodiment 1.

For the method of manufacturing the composite positive-electrode material in the present embodiment, corresponding particle-size types of the LFP material are used herein, and other operations and materials used in the method of the present embodiment are the same as those in the Embodiment 1.

### Embodiment 8

The present embodiment provides a composite positive-electrode material. The only difference between the present embodiment and the Embodiment 1 is that the mass ratio of the LMFP to the LFP is 8:2. The other features in the present embodiment is the same as those in the Embodiment 1.

For the method of manufacturing the composite positive-electrode material in the present embodiment, the LMFP to the LFP of the corresponding ratio are used herein, and other operations and materials used in the method of the present embodiment are the same as those in the Embodiment 1.

### Embodiment 9

The present embodiment provides a composite positive-electrode material. The only difference between the present embodiment and the Embodiment 1 is that the mass ratio of the LMFP to the LFP is 9: 1. The other features in the present embodiment is the same as those in the Embodiment 1.

For the method of manufacturing the composite positive-electrode material in the present embodiment, the LMFP to the LFP of the corresponding ratio are used herein, and other operations and materials used in the method of the present embodiment are the same as those in the Embodiment 1.

### Control embodiment 1

The present embodiment provides a composite positive-electrode material. The only difference between the present embodiment and the Embodiment 1 is that the LFP includes LFP material in one particle-size type. The one particle-size type of the LFP material has a primary particle size distributed in a range of 350nm-500 nm. The other features in the present embodiment is the same as those in the Embodiment 1.

For the method of manufacturing the composite positive-electrode material in the present embodiment, the corresponding particle-size type of the LFP material is used herein, and other operations and materials used in the method of the present embodiment are the same as those in the Embodiment 1.

### Control embodiment 2

The present embodiment provides a composite positive-electrode material. The only difference between the present embodiment and the Embodiment 1 is that no LFP is included. The other features in the present embodiment is the same as those in the Embodiment 1.

### Performance test:

After the positive-electrode materials provided in the above embodiments and the control embodiments are used to prepare corresponding positive-electrode sheets, graphite negative-electrode sheets, PE separators 1 mol/L LiPF₆/EC+EMC electrolytes, and the prepared corresponding positive-electrode sheets are used in the conventional process of preparing lithium-ion batteries to obtain corresponding soft-packed lithium-ion batteries. Each soft-packed lithium-ion battery is step-charged at small currents of 0.05C/0.1C/0.2C. Further, activation, aging, and capacity analysis are performed on the charged soft-packed lithium-ion battery, such that a finished product of lithium-ion battery is obtained.

A compaction density test method is as follows. M mass of each positive-electrode material obtained from the above embodiments and the control embodiments is weighed and placed into a powder compacting mold. The material is compressed under a pressure of 10Mpa for 2min to form a cylindrical positive-electrode material. Heights of each cylindrical positive-electrode material at three different positions in the mold are measured, and an average height of the three measured heights is obtained, serving as a height h of the cylindrical positive-electrode material after the compression. The compaction density = m/(π×R²×h), where the R is a radius of the powder compacting mold.

A capacity test method is as follows. A LAND battery test system is applied on each prepared lithium-ion battery to perform a constant current and constant voltage charging-constant test. In a voltage window of 2.5V-4.2V and at a current density of 0.5C, the battery is charged up to a current of 0.05C. First 3 times of cyclic discharging capacities are tested, and an average value of the capacities obtained from the first 3 times is obtained.

**Table 1**

| | Compaction density (g/cm³) | Gram capacity (mAh/g) |
|---|---|---|
| Embodiment 1 | 2.30 | 142.8 |
| Embodiment 2 | 2.20 | 140.4 |
| Embodiment 3 | 1.85 | 141.4 |
| Embodiment 4 | 2.20 | 140.8 |
| Embodiment 5 | 2.25 | 140.3 |
| Embodiment 6 | 2.10 | 140.6 |
| Embodiment 7 | 2.00 | 141.2 |
| Embodiment 8 | 2.15 | 141.3 |
| Embodiment 9 | 2.20 | 141.7 |
| Control embodiment 1 | 1.70 | 139.8 |
| Control embodiment 2 | 1.65 | 137.1 |

Results of the test are shown in Table 1.

From Table 1, the following can be deduced.
(1) As can be seen from the Embodiments 1-9, in the present disclosure, LFP in various particle size types are mixed with the LMFP. In this way, the compaction density of the composite positive-electrode material is improved, such that the energy density of the lithium-ion battery is improved. As can be seen from FIG. 1, in the present disclosure, the large-sized LFP particles and the smaller-sized LMFP particles are mixed uniformly with each other. In addition, as can be seen from the Embodiment 1 and the Embodiments 4-7, the particle size type of the LFP affects the compaction density of the composite positive-electrode material and the capacity of the battery. As can be seen from the Embodiments 1 and 8-9, the mass ratio of the LMFP to the LFP also affects performance of the positive-electrode material and the battery.
(2) As can be seen from the Embodiment 1 and the Control embodiment 1, the particle size range of LFP in the Control embodiment 1 is the same as that of LMFP, and the large-sized LFP particles and the smaller-sized LMFP particles are not mixed with each other. Therefore, the compaction density of the obtained composite positive-electrode material is reduced, and the electrochemical capacity of the obtained battery is reduced. As can be seen from the Embodiment 1 and the Control embodiment 2, no LFP is mixed in the Control embodiment 2, the performance of the obtained battery in the Control embodiment 2 is lower than that in the Embodiment 1, and the compaction density and the electrochemical capacity of the composite positive-electrode material in the Control embodiment 2 are significantly lower than the compaction density and the electrochemical capacity of the composite positive-electrode material in the Embodiment 1.

In summary, the present disclosure provides a composite positive-electrode material. The composite positive-electrode material includes large-sized LFP particles mixed with smaller-sized LMFP particles. Due to the mixing, the compaction density of the composite positive-electrode material is improved, such that the energy density, cycling performance, and safety performance of the lithium-ion battery are improved effectively.

## Claims

1. A composite positive-electrode material, comprising LMFP and LFP;
wherein, the LMFP has a primary particle size in a range of 20nm-200 nm;
the LFP has a primary particle size in at least two ranges of: 100nm-200 nm; 200nm-350 nm; 350nm-500 nm; and 500nm-1000 nm; and
the primary particle size of the LFP is larger than the primary particle size of the LMFP.

2. The composite positive-electrode material according to claim 1, wherein, a mass ratio of the LMFP to the LFP is (5-9) : (1-5).

3. The composite positive-electrode material according to claim 1 or 2, wherein, the LMFP has a secondary particle size D₅₀ in a range of 0.5µm-10µm.

4. The composite positive-electrode material according to any one of claims 1 to 3, wherein, the LMFP has a secondary particle size D₉₀ in a range of 3µm-18µm.

5. The composite positive-electrode material according to any one of claims 1 to 4, wherein, the LMFP comprises any one or a combination of at least two of: LiMn_{0.5}Fe_{0.5}PO₄, LiMn_{0.6}Fe_{0.4}PO₄, LiMn_{0.7}Fe_{0.3}PO₄, LiMn_{0.8}Fe_{0.2}PO₄, or LiMn_{0.9}Fe_{0.1}PO₄.

6. A method of manufacturing the composite positive-electrode material according to any one of claims 1 to 5, the method comprising: taking the LMFP and the LFP according to formulated amount, and dry mixing the LMFP and the LFP to obtain a composite positive-electrode active material.

7. The method according to claim 6, wherein, the dry mixing is performed for 0.5h to 1h.

8. The method according to claim 6, wherein, the dry mixing comprises a stirring speed of 10rpm to 20rpm and a dispersion speed of 500rpm to 1500rpm.

9. A lithium-ion battery, comprising the composite positive-electrode material according to any one of claims 1 to 5.

10. The lithium-ion battery according to claim 9, wherein, a negative-electrode active material of the lithium-ion battery comprises graphite;
a separator of the lithium-ion battery comprises a PE separator or a PP separator; and
an electrolyte of the lithium-ion battery comprises LiPF₆.
